(19) Europäisches Patentamt
European Patent Office
Office européen des brevets

(11) **EP 3 986 222 B1**

(12) **EUROPÄISCHE PATENTSCHRIFT**

(45) Veröffentlichungstag und Bekanntmachung des Hinweises auf die Patenterteilung:
**12.04.2023 Patentblatt 2023/15**

(21) Anmeldenummer: **20730661.4**

(22) Anmeldetag: **10.06.2020**

(51) Internationale Patentklassifikation (IPC):
***A47L 9/20*** (2006.01)    ***B01D 46/00*** (2006.01)

(52) Gemeinsame Patentklassifikation (CPC):
**A47L 9/20; A47L 9/106; B01D 46/76; B01D 46/90; B01D 2279/55**

(86) Internationale Anmeldenummer:
**PCT/EP2020/066087**

(87) Internationale Veröffentlichungsnummer:
**WO 2020/254167 (24.12.2020 Gazette 2020/52)**

(54) **ANORDNUNG EINER ABREINIGUNGSEINHEIT IN EINER STAUBSAUGVORRICHTUNG UND STAUBSAUGVORRICHTUNG MIT EINER SOLCHEN ANORDNUNG**

ARRANGEMENT OF A CLEANING UNIT IN A VACUUM CLEANER AND VACUUM CLEANER COMPRISING SUCH AN ARRANGEMENT

AGENCEMENT D'UNE UNITÉ DE NETTOYAGE DANS UN DISPOSITIF D'ASPIRATION ET DISPOSITIF D'ASPIRATION DOTÉ D'UN TEL AGENCEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2019 EP 19180880**

(43) Veröffentlichungstag der Anmeldung:
**27.04.2022 Patentblatt 2022/17**

(73) Patentinhaber: **Hilti Aktiengesellschaft**
**9494 Schaan (LI)**

(72) Erfinder: **HANSLMEIER, Xaver**
**87665 Mauerstettten (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**EP-A1- 2 749 193    EP-A1- 3 146 881**
**EP-A2- 1 629 762    EP-A2- 2 052 660**

## Beschreibung

Die vorliegende Erfindung betrifft eine Anordnung einer Abreinigungseinheit in einer Staubsaugvorrichtung. Dabei liegt die Abreinigungseinheit in einer Unterdruckkammer der Staubsaugvorrichtung vor und kann mit einem Schubmodul in verschiedene Positionen innerhalb der Unterdruckkammer, die von einer Turbine und mindestens zwei Filtern gebildet wird, verschoben werden. Dadurch kann die Abreinigungseinheit so innerhalb der Unterdruckkammer positioniert werden, dass je ein Filter von einem Saugstrom entkoppelt und eine Oszillationsbewegung der Abreinigungseinheit auf den entkoppelten Filter übertragen werden kann. In weiteren Aspekten betrifft die Erfindung eine Staubsaugvorrichtung, die eine vorgeschlagene Anordnung einer Abreinigungseinheit umfasst, sowie ein Verfahren zur Filterabreinigung.

Im Stand der Technik sind Staubsaugvorrichtungen bekannt, die beispielsweise auf Baustellen zur Stauberfassung eingesetzt werden. Solche Staubsaugvorrichtungen werden vorzugsweise auch als Bausauger bezeichnet. Bei der Erfassung des Staubs wird im Inneren des Bausaugers mittels einer Turbine ein Unterdruck erzeugt, der den zu erfassenden Staub mittels eines Saugstroms in einen Staubsammelbehälter, der häufig im unteren Bereich des Bausaugers angeordnet ist, saugt, wo der Staub bis zu einer Entleerung des Staubsammelbehälters verbleibt. Um den Motor der Staubsaugvorrichtung vor Verschmutzungen und mechanischen Beeinträchtigungen durch den erfassten Staub zu schützen, weisen Staubsaugvorrichtungen Filter auf, die sich im Laufe des Betriebs mit Staub zusetzen können. Insbesondere kann sich ein sogenannter Filterkuchen ausbilden, der sehr kompakt ausgebildet sein und sich fest mit dem Filtermaterial verbindet. Es ist bekannt, dass die Filter einer Staubsaugvorrichtung regelmäßig gereinigt werden müssen, um ein solches unerwünschtes Zusetzten der Filter zu vermeiden. Die regelmäßige Reinigung der Filter einer Staubsaugvorrichtung wird im Kontext der vorliegenden Erfindung bevorzugt als Filterabreinigung bezeichnet.

Bei konventionellen Staubsaugvorrichtungen, die aus dem Stand der Technik bekannt sind, erfolgt die Abreinigung zumeist dadurch, dass im Rahmen einer Rückspülung die Strömungsrichtung des Saugstroms kurzfristig umgekehrt wird. Die Rückspülung beruht insbesondere auf einem Druckgefälle, wobei durch ein schlagartiges Öffnen einer Klappe oder einer Öffnung in der Staubsaugvorrichtung ein Druckausgleich bewirkt wird, der zu der Rückspülung führt. Nachteilig an dieser Filterabreinigungsmethode ist, dass ein Rückstoß im Saugsystem erzeugt wird, der die Absaugleistung der Staubsaugvorrichtung beeinträchtigen kann. Eine Ausführung der Staubsaugvorrichtung mit zwei Filtern kann dieses Rückstoßproblem vermindern, aber es nicht vollständig kompensieren.

Ein weiterer Nachteil bekannter Filterabreinigungsverfahren besteht darin, dass als Spülluft häufig ungefilterte Umgebungsluft verwendet wird. Dabei kann es vorkommen, dass durch Verunreinigungen, die in der Umgebungsluft enthalten sein können, die an der Filterabreinigung beteiligten Komponenten mit Staub und/oder Verunreinigungen belegt werden, so dass langfristig Beschädigungen der Komponenten oder der Staubsaugvorrichtung hervorgerufen werden können.

Eine weitere bekannte Methode zur Filterabreinigung besteht darin, dass mittels Vibrationen Stoßbewegungen erzeugt werden, mit denen der Filter abgereinigt wird. Diese Vibrationsabreinigung hat gegenüber der Rückspülung den Vorteil, dass sie druck- und arbeitspunktunabhängig von der Staubsaugvorrichtung erfolgen kann. Wenn die Staubsaugvorrichtung mit Vibrationen abgereinigt wird, kann ein Entkoppeln des Filters vom Saugstrom positive Auswirkungen auf das Abreinigungsergebnis haben. Dies insbesondere deswegen, weil dadurch ein Siebeffekt bzw. die Erzeugung eines Luftstroms vermieden wird. Durch das Entkoppeln kommt es allerdings bei Staubsaugvorrichtungen mit einem Filter zu einer unerwünschten Unterbrechung des Saugvorgangs. Bei Staubsaugvorrichtungen mit mehr als einem Filter müssen nachteiligerweise pro Filter je ein Entkopplungsventil und ein entsprechender separater Aktor vorgesehen sein, die den Aufbau der Staubsaugvorrichtung kompliziert und fehleranfällig machen.

Wenn zwei Filter verwendet werden, kann zwar mit der Staubsaugvorrichtung parallel gesaugt und die Filter der Staubsaugvorrichtung können abwechselnd abgereinigt werden. Allerdings ist das Vibrationsverfahren mit dem Nachteil behaftet, dass die Komponenten der Staubsaugvorrichtung einer hohen Stoßbelastung ausgesetzt werden, wobei diese Stoßbelastung darüber hinaus nachteiligerweise eine einachsige Stoßbelastung darstellt. Aus dem Stand der Technik sind die Dokumente EP 2 052 660 A2, EP 2 749 193 A1, EP 1 629 762 A2 und EP 3 146 881 A1 bekannt.

Aufgabe der vorliegenden Erfindung ist es, die vorstehend beschriebene Nachteile und Mängel des Standes der Technik zu überwinden und eine Anordnung einer Abreinigungseinheit für eine Staubsaugvorrichtung bereitzustellen, so dass es mit der Staubsaugvorrichtung möglich ist, gleichzeitig zu saugen und mindestens einen Filter abzureinigen. Insbesondere soll ein Leistungsverlust in Bezug auf die Saugleistung während des Abreinigungsvorgangs mit der Erfindung vermieden werden und eine mehrachsige Filterreinigung ermöglicht werden. Darüber hinaus soll die bereitzustellende Staubsaugvorrichtung möglichst wenige Bauteile umfassen, um wartungsarm und möglichst wenig fehleranfällig zu sein.

Die Aufgabe wird durch den Gegenstand der unabhängigen Ansprüche gelöst. Vorteilhafte Ausführungsformen zu dem Gegenstand der unabhängigen Ansprüche finden sich in den abhängigen Unteransprüchen.

**Beschreibung der Erfindung:**

Die Aufgabe wird gelöst durch eine Anordnung einer Abreinigungseinheit in einer Staubsaugvorrichtung. Die Anordnung ist dadurch gekennzeichnet, dass die Abreinigungseinheit in einer Unterdruckkammer der Staubsaugvorrichtung vorliegt, wobei die Unterdruckkammer von einer Turbine und einem ersten Filter und einem zweiten Filter begrenzt wird, wobei die Abreinigungseinheit ein Schubmodul umfasst, das dazu eingerichtet ist, die Abreinigungseinheit so innerhalb der Unterdruckkammer zu positionieren, dass je ein Filter von einem Saugstrom entkoppelbar ist und eine Oszillationsbewegung der Abreinigungseinheit auf den entkoppelten Filter übertragbar ist.

Es ist im Sinne der Erfindung bevorzugt, dass die Oszillation durch vorzugsweise zwei Exzenter erzeugt wird, die sich gemäß einer bevorzugten Ausgestaltung der Erfindung um bevorzugt im Wesentlichen 180 Grad versetzt und gleichsinnig zueinander drehen. Dadurch können sich in der Längsachse auftretende Fliehkräfte kompensieren, während sich die Fliehkräfte in der Querachse zu einer Drehkraft ergänzen, die vorteilhafterweise als Abreinigungskraft genutzt werden kann. Mit anderen Worten kann die Kraft, die durch die Überlagerung der Fliehkräfte der beiden Exzenter in der Querachse erzeugt wird, zum Zwecke der Filterabreinigung verwendet werden. Es ist im Sinne der Erfindung bevorzugt, dass durch die bevorzugt gleichsinnige Drehbewegung der Exzenter eine translatorische Linearbewegung der Abreinigungseinheit erzeugt wird, die im Sinne der Erfindung vorzugsweise auch als Hin- und Herbewegung bzw. als Rechts- und Linksbewegung bezeichnet wird. Insbesondere stellt die Rechts- und Linksbewegung im Sinne der Erfindung eine Oszillationsbewegung dar, die von der Abreinigungseinheit auf die Filter übertragen werden kann, so dass die Filter durch die Oszillationen abgereinigt werden. Vorzugsweise wird die Oszillationsbewegung durch Frequenz- und Amplitudenwerte gekennzeichnet, die in Abhängigkeit von Parametern, die die Staubsaugvorrichtung bzw. ihre Geometrie bzw. ihre Abmessungen beschreiben, ausgewählt und eingestellt werden können.

Vorteilhafterweise wird durch die Erfindung ein Abreinigungsmechanismus bereitgestellt, der die Nachteile des Standes der Technik überwindet. Insbesondere kann durch die Erfindung eine Abreinigungseinheit bereitgestellt werden, die statt einer einfachen Vibration eine Oszillationsbewegung erzeugt, die der Abreinigung der Filter in der Staubsaugvorrichtung dient. Dadurch wird als besonderer Vorteil der Erfindung eine mehrachsige Reinigung der Filter ermöglicht.

Vorzugsweise stellt die vorgeschlagene Anordnung einer Abreinigungseinheit in einer Staubsaugvorrichtung eine besonders einfache Anordnung dar, die wartungsarm und wenig anfällig für Störungen ist. Insbesondere können die Herstellungskosten für Staubsaugvorrichtungen, die eine entsprechende Abreinigungsanordnung aufweisen, gegenüber den Herstellungskosten für konventionelle Staubsaugvorrichtungen deutlich reduziert werden. Indem im Kontext der vorliegenden Erfindung Oszillationen anstelle der sonst üblichen Vibrationen zur Filterabreinigung verwendet werden, wendet sich die Erfindung vom Stand der Technik ab. Insbesondere war es für die Fachwelt überraschend, dass Oszillationen innerhalb einer Staubsaugvorrichtung so erzeugt und auf die Filter übertragen werden können, dass eine wirksame und effiziente Filterreinigung insbesondere auch für solche Staubsaugvorrichtungen bereitgestellt werden kann, die über zwei Filter verfügen. Bisher war die Fachwelt davon ausgegangen, dass für eine wirksame Filterabreinigung für mehr als einen Filter in einer Staubsaugvorrichtung mehr als eine Abreinigungsvorrichtung bereitgestellt werden muss. Die Erfindung ist demnach mit dem Vorteil verbunden, dass nur eine Abreinigungseinheit für die effiziente Abreinigung von zwei Filtern bereitzustellen ist.

Ein weiterer Vorteil der Erfindung besteht darin, dass mit der vorgeschlagenen Anordnung eine mehrachsige Abreinigungsbewegung der Filterelemente ermöglicht werden kann. Es kann aber in einigen Anwendungsgebieten der Erfindung auch bevorzugt sein, dass eine einachsige Bewegung der Filterelemente zur Abreinigung verwendet wird.

Darüber hinaus hat sich die Oszillationsbewegung, mit der im Kontext der vorliegenden Erfindung die Filterreinigung ausgeführt wird, als besonders materialschonend im Vergleich zu den aus dem Stand der Technik bekannten Vibrationen herausgestellt. Ein weiterer Vorteil der Erfindung besteht darin, dass die Filterabreinigung druckunabhängig durchgeführt werden kann. Überraschenderweise kann mit der vorgeschlagenen Anordnung eine besonders geräuscharme Abreinigungstechnologie bereitgestellt werden, die insbesondere ohne störende Stoßgeräusche auskommt.

Es ist im Sinne der Erfindung insbesondere bevorzugt, dass eine Staubsaugvorrichtung ein so ausgebildetes Schubmodul und eine so ausgebildete Abreinigungseinheit umfasst, dass eine doppelte Vorsehung dieser Staubsaugvorrichtungskomponenten nicht erforderlich ist. Insbesondere kann durch die Erfindung die Vorsehung eines Schubmoduls und einer Abreinigungseinheit pro Filter vermieden werden. Insbesondere ist somit im Kontext der vorgeschlagenen Erfindung lediglich ein Schubmodul für zwei Filter vorgesehen. Darüber hinaus ist auch lediglich eine Abreinigungseinheit für die beiden Filter vorgesehen. Dadurch wird insbesondere ein einfacher Aufbau der Staubsaugvorrichtung ermöglicht.

Vorzugsweise ist die Abreinigungseinheit innerhalb der Unterdruckkammer der Staubsaugvorrichtung beweglich ausgebildet, so dass sie von dem Schubmodul zu Bewegungen veranlasst werden kann. Dabei kann es sich beispielsweise um Vertikalbewegungen entlang einer gedachten vorzugsweise im Wesentlichen horizontal verlaufenden Achse handeln ("Linearlösung") oder um eine Drehbewegung um einen Drehpunkt ("Drehlösung"). Insbesondere die drehbare Ausgestaltung der Abreinigungseinheit in Verbindung mit dem Schubmodul bewirkt einen Teil der technischen Vorteile der Erfindung.

Es ist im Sinne der Erfindung bevorzugt, dass die Abreinigungseinheit zwei Exzenter umfasst, die durch ihre Rotationsbewegungen dazu eingerichtet sind, die Oszillationsbewegung zu erzeugen. Vorzugsweise sind die Exzenter dazu eingerichtet, gleichsinnige Rotationsbewegungen auszuführen. Mit anderen Worten drehen sich die beiden Exzenter in dieselbe Drehrichtung, wie es durch die Pfeile in den Figuren angedeutet wird. Es ist im Sinne der Erfindung ganz besonders bevorzugt, dass sich die Exzenter um 180 ° bzw. um eine halbe Drehung versetzt zueinander drehen. Durch diesen Versatz in Bezug auf die Rotationsbewegungen der beiden Exzenter wird vorzugsweise bewirkt, dass sich die Fliehkräfte der Exzenter gegenseitig aufheben bzw. dass sich die Fliehkräfte gegenseitig kompensieren. Mit anderen Worten können durch die Rotationsbewegungen der Exzenter die Fliehkräfte der rotierenden Exzenter in der Horizontalen gegenseitig kompensiert werden. Dadurch wird vorzugsweise ein Drehmoment in der Vertikalen hervorgerufen, welches die Oszillationsbewegung der Abreinigungseinheit bewirkt. Es ist im Sinne der Erfindung bevorzugt, dass zwischen den beiden Exzentern eine Antriebsvorrichtung angeordnet vorliegen kann, die vorzugsweise dazu eingerichtet ist, die beiden Exzenter anzutreiben.

Wenn die Filter innerhalb der Unterdruckkammer der Staubsaugvorrichtung entlang einer im Wesentlichen gedachten horizontalen Linie bzw. Geraden angeordnet sind ("Linearlösung"), so kann durch die Filter eine Horizontalebene definiert werden, parallel zu der Bewegungen der Abreinigungseinheit erfolgen können. Solche Bewegungen werden im Sinne der Erfindung bevorzugt als "Vertikalbewegungen" oder "seitliche Bewegungen" bezeichnet. Es ist im Sinne der Erfindung insbesondere bevorzugt, dass die Abreinigungseinheit in der Lage ist, solche Vertikalbewegungen auszuführen, wobei die Vertikalbewegungen vorzugsweise durch das Schubmodul bewirkt werden. Vorzugsweise verlaufen die Vertikalbewegungen der Abreinigungseinheit innerhalb der Unterdruckkammer zwischen den Filtern der Staubsaugvorrichtung. Vorzugsweise wird die Vertikalbewegung der Abreinigungseinheit insbesondere durch ein in vertikaler Richtung wirkendes Drehmoment hervorgerufen, das durch die Kompensation der Fliehkräfte innerhalb der Abreinigungseinheit erzeugt wird. Es ist im Sinne der Erfindung insbesondere bevorzugt, dass die Vertikalbewegung der Abreinigungseinheit durch das Schubmodul bewirkt wird. Es ist im Sinne der Erfindung insbesondere bevorzugt, dass eine Drehbewegung der Exzentereinheit der Abreinigungseinheit in eine Drehbewegung des Filters übertragen wird. Die Exzentereinheit der Abreinigungseinheit kann im Sinne der Erfindung bevorzugt auch als Oszillations-Modul der Staubsaugvorrichtung bezeichnet werden.

Das Schubmodul kann beispielsweise von einem Aktor gebildet werden, der vorzugsweise einen Elektromagneten umfasst. Vorzugsweise kann der Elektromagnet von zwei Seiten angesteuert werden. Beispielsweise kann mit Hilfe des Schubmoduls die Abreinigungsvorrichtung seitlich hin- und herbewegt werden. Diese Bewegungen der Abreinigungsvorrichtung werden im Sinne der Erfindung bevorzugt als Vertikalbewegungen bezeichnet. Ferner kann das Schubmodul Federelemente umfassen, die eine Rückstellkraft auf die Abreinigungseinheit ausüben, so dass vorteilhafterweise die Vertikalbewegung der Abreinigungseinheit unterstützt werden.

Es ist im Sinne der Erfindung bevorzugt, dass die Abreinigungseinheit einen ersten und zweiten Stößel aufweist, wobei der erste Stößel dazu eingerichtet ist, einen Eingang des ersten Filters abzudichten und der zweite Stößel dazu eingerichtet ist, einen Eingang des zweiten Filters abzudichten. Dadurch können die Filter durch die Vorsehung der Stößel in Kombination mit der Bewegung der Abreinigungseinheit vorteilhafterweise von der Unterdruckkammer abgetrennt werden. Insbesondere wird durch die Trennung von Filter und Unterdruckkammer die Entkoppelung der Filter gegenüber dem Saugstrom erreicht, wobei der Saugstrom vorzugsweise durch die Unterdruckkammer strömt. Der Saugstrom wird vorzugsweise durch den Unterdruck hervorgerufen, der mit der Turbine der Staubsaugvorrichtung erzeugt werden kann. Vorzugsweise ist die Staubsaugvorrichtung mittels des Saugstroms dazu eingerichtet, Staub zu erfassen, der beispielsweise bei der Arbeit mit einer Bohrmaschine oder einem Kernbohrgerät anfällt bzw. erzeugt wird. Dadurch wird vorteilhafterweise vermieden, dass der Staub in die Atemwege eines Nutzers gelangt.

Darüber hinaus sind die Stößel der Abreinigungseinheit dazu eingerichtet, die Oszillationsbewegung der Abreinigungseinheit auf die Filter zu übertragen. Dadurch wird vorzugsweise die Abreinigungswirkung der Abreinigungseinheit erreicht. Vorzugsweise werden die Filter durch die Oszillationsbewegungen durchgeschüttelt, so dass der Staub oder ein Filterkuchen, der sich gegebenenfalls gebildet hat, losgerüttelt wird. Durch diese Rüttelbewegung können der Staub bzw. der Filterkuchen in den Staubsammelbehälter im unteren Bereich der Staubsaugvorrichtung fallen. Die Übertragung der Oszillationsbewegung erfolgt vorzugsweise durch einen Formschluss zwischen den Stößeln und den Eingängen der Filter. Vorzugsweise bilden die beiden Stößel einen seitlichen Abschluss der Abreinigungseinheit, wobei die Stößel die Oszillationsbewegung der Abreinigungseinheit auf die Filter übertragen, wozu vorzugsweise der Formschluss zwischen den Stößeln und den Filtern verwendet wird.

Es ist im Sinne der Erfindung bevorzugt, dass die Abreinigungseinheit bei einer Linearlösung im Wesentlichen zwischen den Filtern angeordnet vorliegt. Die Linearlösung ist im Sinne der Erfindung vorzugsweise dadurch gekennzeichnet, dass die Filter, die vorzugsweise zusammen mit der Turbine die Unterdruckkammer der Staubsaugvorrichtung begrenzen, im Wesentlichen entlang einer horizontal verlaufenden gedachten Linie bzw. Gerade angeordnet vorliegen. Mit anderen Worten können die Filter eine gedachte Linie definieren, die vorzugsweise im Wesentlichen parallel zu einem Untergrund verläuft, auf dem die Staubsaugvorrichtung aufgestellt ist. Bei der Linearlösung sind die Filter der Staubsaugvorrichtung vorzugsweise an gegenüberliegenden Seiten oder Seitenwänden der Unterdruckkammer angeordnet, wobei die Filter insbesondere im Wesentlichen parallel zueinander angeordnet sein können. Die vorzugsweise parallel angeordneten Filter sind bevorzugt in einem unteren Bereich der Unterdruckkammer angeordnet, während die Turbine der Staubsaugvorrichtung einen oberen Abschluss der Unterdrucckammer bildet. Die Begriffe "oben" und "unten" stellen im Kontext der vorliegenden Erfindung für den Fachmann keine unklaren Begriffe dar. Ein unterer Bereich der Staubsaugvorrichtung bzw. der Unterdruckkammer ist vorzugsweise dadurch gekennzeichnet, dass er näher an dem Untergrund angeordnet ist als ein oberer Bereich der Staubsaugvorrichtung bzw. der Unterdruckkammer, der seinerseits einen größeren Abstand zu dem Untergrund, auf dem die Staubsaugvorrichtung ausgestellt ist, aufweist.

Die Filter münden vorzugsweise jeweils mit einem Eingangsbereich in die Unterdruckkammer der Staubsaugvorrichtung. Diese Eingangsbereiche werden im Sinne der Erfindung vorzugsweise als Filtereingänge bezeichnet. Es ist im Sinne der Erfindung bevorzugt, dass ein erster Filter der Staubsaugvorrichtung bzw. ein erster Filtereingang mit dem ersten Stößel der Abreinigungseinheit einen Formschluss bildet, wodurch die Oszillationen der Abreinigungseinheit auf den ersten Filter übertragen werden können. Analog kann ein zweiter Filter der Staubsaugvorrichtung bzw. ein zweiter Filtereingang mit dem zweiten Stößel der Abreinigungseinheit einen Formschluss eingehen, wodurch die Oszillationen der Abreinigungseinheit auf den zweiten Filter übertragen werden können. Ferner wird durch den Formschluss der jeweilige Filter gegenüber der Unterdruckkammer abgedichtet und vom Saugstrom innerhalb der Kammer abgetrennt. Diese Trennung wird im Sinne der Erfindung vorzugsweise auch als Entkoppelung bezeichnet. Vorzugsweise ist zu einem Zeitpunkt t1 während des Betriebs der Staubsaugvorrichtung einer der Filter von der Unterdruckkammer abgetrennt, während zu einem Zeitpunkt t2 der andere Filter von der Unterdruckkammer abgetrennt sein kann. Es ist im Sinne der Erfindung ganz besonders bevorzugt, dass jeweils der abgetrennte bzw. entkoppelte Filter während der Phase des Abgetrenntseins abgereinigt wird. Mit anderen Worten ist es im Sinne der Erfindung bevorzugt, dass jeweils der entkoppelte Filter während seiner Entkoppelung vom Saugstrom abgereinigt wird. Es kann auch Zeiten ti geben, zu denen beide Filter mit der Unterdruckkammer und dem Saugstrom verbunden vorliegen. In diesem Fall werden beide Filter mit dem Unterdruck, der in der Unterdruckkammer herrscht, beaufschlagt und beide Filter können zur Reinigung des Luftstroms innerhalb der Staubsaugvorrichtung beitragen. Beispielsweise kann sich die Abreinigungseinheit in einer Zeitspanne $\Delta$tBew, die beispielsweise einen Zeitpunkt ti umfasst, durch die Unterdruckammer von der einen Seite zur anderen Seite bewegen, wobei die Stößel der Abreinigungseinheit während der Zeitspanne $\Delta$tBew vorzugsweise nicht mit den Eingängen der Filter in Kontakt vorliegen. Mit anderen Worten ist es im Sinne der Erfindung bevorzugt, dass während der Zeitspanne $\Delta$tBew eine Vertikalbewegung der Abreinigungseinheit innerhalb der Unterdruckkammer der Staubsaugvorrichtung erfolgt. Insbesondere ist es bevorzugt, dass es beim Betrieb der Staubsaugvorrichtung zu Betriebs- bzw. Abreinigungszyklen kommt, bei denen zunächst während einer Zeitspanne $\Delta$t1 der erste Filter abgereinigt wird. In dieser Zeitspanne $\Delta$t1 besteht vorzugsweise ein Formschluss zwischen dem ersten Stößel der Abreinigungseinheit und dem Eingang des ersten Filters, der im Sinne der Erfindung vorzugsweise auch als "erster Filtereingang" bezeichnet wird. Während der Zeitspanne $\Delta$t1 wird vorzugsweise der erste Filter abgereinigt, während der zweite Filter zur Filterung des Saugstroms zur Verfügung steht. Anschließend bewegt sich die Abreinigungseinheit während der Zeitspanne $\Delta$tBew mit einer Vertikalbewegung vom ersten Filter auf der einen Seite der Unterdruckkammer zum zweiten Filter, der vorzugsweise auf der anderen Seite der Unterdruckkammer angeordnet vorliegt. Während der Zeitspanne $\Delta$tBew findet keine Filterabreinigung statt und beide Filter der Staubsaugvorrichtung stehen zu Filterzwecken zur Verfügung. Daran an schließt sich eine Zeitspanne $\Delta$t2, in der der zweite Stößel der Abreinigungseinheit mit dem zweiten Filtereingang, d.h. dem Eingang des zweiten Filters, in Formschluss gelangt, so dass der zweiter Filter vom Saugstrom abgetrennt wird. In dieser Zeitspanne $\Delta$t2 wird vorzugsweise der zweite Filter abgereinigt, während der erste Filter zum Filtern des Saugstroms zur Verfügung steht. Die Abreinigung der Filter erfolgt insbesondere durch die Übertragung von Oszillationsbewegungen von der Abreinigungseinheit auf den jeweils abzureinigenden Filter.

Die Stößel der Abreinigungseinheit weisen vorzugsweise eine flache bzw. ebene Unterseite auf, mit der sie der Exzentereinheit der Abreinigungseinheit zugewandt vorliegen. Bei der Linearlösung sind die im Wesentlichen flache Unterseite und eine Seitenwand der Exzentereinheit vorzugsweise im Wesentlichen parallel zueinander ausgebildet. Mit anderen Worten weisen die Unterseiten der Stößel in allen Punkten einen im Wesentlichen gleichen Abstand zu der Seitenwand der Exzentereinheit der Abreinigungseinheit auf, der sie zugewandt sind. Die Exzentereinheit der Abreinigungseinheit ist vorzugsweise derjenige Bereich der Abreinigungseinheit, der die vorzugsweise zwei Exzenter aufweist. Die Stößel weisen auf ihrer der Exzentereinheit bzw. der Abreinigungseinheit abgewandten Seite eine abgerundete äußere Form auf, die beispielsweise einem Bereich eines Kreisumfangs entsprechen kann.

Es ist im Sinne der Erfindung bevorzugt, dass die Abreinigungseinheit bei einer Drehlösung im Wesentlichen oberhalb der Filter angeordnet vorliegt. Mit anderen Worten ist es im Sinne der Erfindung bevorzugt, dass das Abreinigungsmodul bei einer Linearlösung zwischen den Filtern angeordnet ist, während die Abreinigungseinheit bei der Drehlösung über bzw. oberhalb der Filter angeordnet ist. Die Drehlösung ist vorzugsweise dadurch gekennzeichnet, dass die Filter der Staubsaugvorrichtung auf gegenüberliegenden Seiten der Unterdruckkammer angeordnet vorliegen, wobei die Filter insbesondere in einem unteren Bereich der Unterdruckkammer angeordnet sind, während die Turbine der Staubsaugvorrichtung vorzugsweise einen oberen Abschluss der Unterdruckkammer bildet. Vorzugsweise sind die Filter der Staubsaugvorrichtung schräg angeordnet, wobei die Filter in einem unteren Bereich einen kleineren Abstand zueinander aufweisen als in einem oberen Bereich. Mit anderen können die Filter in einem bevorzugten Ausführungsbeispiel der Erfindung mit einer gedachten horizontalen Ebene, die vorzugsweise im Wesentlichen parallel zu einem Untergrund, auf dem die Staubsaugvorrichtung steht, ausgebildet ist, Neigungswinkel alpha und beta einschließen. Der Neigungswinkel alpha beschreibt vorzugsweise die Schrägstellung des zweiten Filters innerhalb der Staubsaugvorrichtung, während der Winkel beta die Schrägstellung des ersten Filters innerhalb der Staubsaugvorrichtung beschreibt. Vorzugsweise können die Neigungswinkel des ersten Filters und des zweiten Filters über die Relation

$$ beta = 180\,° - alpha $$

miteinander verknüpft sein. Es ist im Sinne der Erfindung bevorzugt, dass die Neigungswinkel alpha und beta Nebenwinkel darstellen und sich zu 180 ° ergänzen. Es ist im Sinne der Erfindung insbesondere bevorzugt, dass die Filter jeweils einen spitzen Winkel mit einer Horizontalebene innerhalb der Staubsaugvorrichtung einschließen.

Es ist im Kontext der Drehlösung bevorzugt, dass die Abreinigungseinheit über ein Verbindungsmittel mit dem Schubmodul und weiter mit einem der beiden Filtereingänge verbunden vorliegt. In einem bevorzugten Ausführungsbeispiel der Erfindung kann die Abreingungseinheit über das Schubmodul beispielsweise mit dem Eingang des zweiten Filters verbunden vorliegen. Das Verbindungsmittel kann beispielsweise einen Drehpunkt umfassen, um den sich die Abreinigungseinheit drehen kann, wenn sie vom Schubmodul bewegt wird. Durch diese Drehbewegung der Abreinigungseinheit können die Stößel in Formschluss mit den Filtereingängen gelangen, diese abdichten und die Oszillationsbewegungen auf die Filter übertragen.

Die Eingangsbereiche der Filter werden vorzugsweise jeweils von zwei Seitenkomponenten gebildet, die ausgehend von Eck- bzw. Randpunkten der Filter in Richtung der Unterdruckkammer schräg aufeinander zulaufen. Dabei können die beiden einander zugewandten Seitenkomponenten des ersten und des zweiten Filters im Wesentlichen parallel zueinander bzw. im Wesentlichen senkrecht zu einer virtuellen Horizontalebene angeordnet sein. Diese einander zugewandten Seitenkomponenten des ersten und des zweiten Filters werden im Sinne der Erfindung bevorzugt auch als innere Seitenkomponenten der Filtereingänge bezeichnet, während die jeweils anderen Seitenkomponenten der Filter bzw. der Filtereingangsbereich vorzugsweise als äußere Seitenkomponenten bezeichnet werden. Die Seitenkomponenten der Filter können mit einer elastischen Aufhängung miteinander verbunden vorliegen. Mit anderen Worten ist es im Sinne der Erfindung bevorzugt, dass die Seitenkomponenten der Filterelemente in einem Übergangsbereich zu den Seiten- bzw. Begrenzungswänden der Unterdruckkammer Mittel zur elastischen Aufhängung der Filter umfassen.

In einem bevorzugten Ausführungsbeispiel der Erfindung liegt das Schubmodul insbesondere mit der inneren Seitenkomponente des zweiten Filters verbunden vor. Das Schubmodul ist im Kontext der Drehlösung vorzugsweise dazu eingerichtet, eine Kipp- oder Drehbewegung der Abreinigungseinheit innerhalb der Unterdruckkammer der Staubsaugvorrichtung zu bewirken. Eine Drehbewegung kann beispielsweise um einen Drehpunkt herum erfolgen. Beispielsweise kann das Abreinigungsmodul dergestalt verkippt oder gedreht werden, dass der erste Stößel der Abreinigungseinheit in Formschluss mit dem Eingang des ersten Filters der Staubsaugvorrichtung gelangt. Dadurch können die Oszillationsbewegungen, die durch die Abreinigungseinheit erzeugt werden, auf den ersten Filter übertragen werden, so dass eine Abreinigung des ersten Filters bewirkt wird. Dies kann beispielsweise während einer Zeitspanne $\Delta t1$ erfolgen. In dieser Zeitspanne $\Delta t1$ ist der erste Filter vorzugsweise von der Unterdruckkammer und dem dort strömenden Saugstrom abgekoppelt, so dass der erste Filter in dieser Zeitspanne $\Delta t1$ nicht zur Reinigung der Saugstromluft beiträgt. Analog kann die Abreinigungseinheit bei der Drehlösung so verkippt oder gedreht werden, dass der zweite Stößel in Formschluss mit dem zweiten Filtereingang gelangt. Dadurch können die Oszillationsbewegungen, die durch die Abreinigungseinheit erzeugt werden, während einer Zeitspanne $\Delta t2$ auf den zweiten Filter übertragen werden, so dass eine Abreinigung des zweiten Filters bewirkt wird. In dieser Zeitspanne $\Delta t2$ ist der zweite Filter vorzugsweise von der Unterdruckkammer und der dort herrschenden Saugströmung abgetrennt, d.h. im Sinne der Erfindung bevorzugt entkoppelt. Dadurch kann der zweite Filter in der Zeitspanne $\Delta t2$ nicht zur Reinigung der Saugstromluft beitragen. Vorzugsweise findet in einer Zeitspanne $\Delta tBew$ keine Filterabreinigung statt, da sich in dieser Zeitspanne die Abreinigungseinheit von einer ersten Abreinigungsposition in eine zweite Abreinigungsposition begibt bzw. bewegt wird. Dies erfolgt bevorzugt durch eine Vertikalbewegung oder eine Drehbewegung der Abreinigungseinheit. Mit dem Begriff "erste Abreinigungsposition" wird vorzugsweise der Zustand beschrieben, in dem die Abreinigungseinheit bzw. ihr erster Stößel mit dem ersten Filtereingang in Formschluss vorliegt. Diese erste Abreinigungsposition kann insbesondere während der Zeitspanne Δt1 vorliegen, in der der erste Filter abgereinigt wird. Analog kann mit dem Begriff "zweite Abreinigungsposition" vorzugsweise der Zustand beschrieben werden, in dem die Abreinigungseinheit bzw. ihr zweiter Stößel mit dem Eingang des zweiten Filters in Formschluss vorliegt. Diese zweite Abreinigungsposition kann insbesondere während der Zeitspanne Δt2 vorliegen, in der der zweite Filter abgereinigt wird.

Es ist im Sinne der Erfindung bevorzugt, dass die Stößel - insbesondere im Kontext der Drehlösung - verkippt in Bezug auf die Exzentereinheit der Abreinigungseinheit angeordnet vorliegen können. In diesem Ausführungsbeispiel der Erfindung verlaufen die Unterseiten der Stößel, die der Exzentereinheit zugewandt sind, nicht parallel zu den Seitenwänden der Exzentereinheit. Die Verkippung der Stößel ermöglicht einen besseren Formschluss zwischen den Stößeln und den Filtereingängen, so dass auf diese Weise eine besonders dichte Entkopplung bzw. wirksame Abtrennung der Filter von der Unterdruckkammer erreicht werden kann, um eine Abreinigung der Filter zu ermöglichen, ohne dass der Unterdruck innerhalb der Unterdruckkammer, der für die Stauberfassung erforderlich ist, beeinträchtigt wird. Die Bereitstellung einer vorzugsweise abwechselnd arbeitenden Abreinigung von zwei Filtern in einer Staubsaugvorrichtung mit nur einem Abreinigungsmodul, das bevorzugt dazu eingerichtet ist, abwechselnd den einen bzw. den anderen Filter vom Saugstrom der Staubsaugvorrichtung abzukoppeln, stellt ein wesentliches Verdienst der vorliegenden Erfindung dar.

Es ist im Sinne der Erfindung bevorzugt, dass die drei Komponenten, die die Unterdruckkammer begrenzen, insbesondere Turbine, erster Filter und zweiter Filter, durch Begrenzungs- oder Seitenwände miteinander verbunden vorliegen, so dass durch die Komponenten in Verbindung mit den Seitenwänden ein Hohlraum gebildet wird, der dazu eingerichtet ist, einem Unterdruck, der vorzugsweise von der Turbine der Staubsaugvorrichtung erzeugt wird, standzuhalten.

In einem zweiten Aspekt betrifft die Erfindung eine Staubsaugvorrichtung, die eine Anordnung einer Abreinigungseinheit nach einem der vorhergehenden Ansprüche umfasst. Die vorgeschlagene Staubsaugvorrichtung weist insbesondere eine beweglich ausgestaltete Abreinigungseinheit auf, die sich zwischen verschiedenen Positionen innerhalb einer Unterdruckkammer der Staubsaugvorrichtung hin- und herbewegen kann, so dass zu unterschiedlichen Zeiten t entweder die eine (zum Beispiel "erste Abreinigungsposition") oder die andere (zum Beispiel "zweite Abreinigungsposition") oder kein Filter ("mittlere Position") abgereinigt wird.

In einem weiteren Aspekt betrifft die Erfindung ein Verfahren zur Abreinigung von Filtern in einer Staubsaugvorrichtung, wobei im Rahmen des Verfahrens Oszillationsbewegungen durch eine Abreinigungseinheit auf die Filter übertragen werden. Die Definitionen, technischen Wirkungen und Vorteile, die für die Abreinigungsanordnung beschrieben wurden, gelten für die Staubsaugvorrichtung und das Abreinigungsverfahren analog. Insbesondere ist ein Abreinigungsverfahren vorgesehen, bei dem eine Abreinigungseinheit in einer Unterdruckkammer der Staubsaugvorrichtungen verschiedene Positionen einnehmen kann, wobei in einer ersten oder zweiten Abreinigungsposition Oszillationsbewegungen auf den ersten oder zweiten Filter der Staubsaugvorrichtung übertragen werden können und wobei in einer mittleren Position keine Filterabreinigung erfolgt und beide Filter für die Reinigung der Luft des Saugstroms in der Unterdruckkammer der Staubsaugvorrichtung zur Verfügungen stehen. Vorzugsweise ist die Abreinigungseinheit in der ersten oder zweiten Abreinigungsposition in Kontakt mit dem ersten oder dem zweiten Filter der Staubsaugvorrichtung. Insbesondere kann jeweils ein Formschluss gebildet werden zwischen einem ersten Stößel der Abreinigungseinheit und dem Eingang des ersten Filters oder es kann ein Formschluss gebildet werden zwischen einem zweiten Stößel der Abreinigungseinheit und dem Eingang des zweiten Filters der Staubsaugvorrichtung. Es ist im Sinne der Erfindung bevorzugt, dass die Oszillationsbewegungen mittels dem Formschluss von der Abreinigungseinheit auf die Filter übertragen werden können. Die Oszillationsbewegungen werden vorzugsweise von einer Exzentereinheit gebildet, die bevorzugt zwei Exzenter umfassen kann. Diese Exzenter drehen sich zur Erzeugung der Oszillationen, wobei die Exzenter vorzugsweise gleichsinnig, aber um im Wesentlichen 180 Grad versetzt zueinander rotieren. Das vorgeschlagene Abreinigungsverfahren kann vorzugsweise durch die folgenden Schritte beschrieben werden:

a)  Bereitstellung einer Staubsaugvorrichtung mit einer Abreinigungseinheit, wobei die Abreinigungseinheit zunächst in einer mittleren Position in einer Unterdruckkammer angeordnet vorliegt, so dass Luft eines Saugstroms während des Betriebs der Staubsaugvorrichtung mit Filtern gereinigt wird,

b)  Bewegung der Abreinigungseinheit innerhalb der Unterdruckkammer der Staubsaugvorrichtung, so dass eine erste oder eine zweite Abreinigungsposition eingenommen wird,

c)  Formschluss zwischen der Abreinigungseinheit und einem Eingang des ersten oder des zweiten Filters,

d)    Übertragung von Oszillationsbewegungen von der Abreinigungseinheit auf den ersten oder den zweiten Filter, wobei der erste oder der zweite Filter durch die Oszillationsbewegungen abgereinigt wird,

e)    Bewegung der Abreinigungseinheit in die mittlere Position oder in die jeweils andere Abreinigungsposition.

Vorteilhafterweise kann mit der Erfindung sichergestellt werden, dass mit der Staubsaugvorrichtung zu allen Betriebszeiten optimal Staub erfasst werden kann, ohne dass es zu Beeinträchtigungen der Saugleistung zu denjenigen Zeiten kommt, in denen die Filter der Staubsaugvorrichtung abgereinigt werden, wie dies in konventionellen Staubsaugvorrichtungen der Fall ist. Dies wird entweder dadurch erreicht, dass die Abreinigungseinheit in der mittleren Position vorliegt und beide Filter zur Reinigung der Luft im Saugstrom zur Verfügung stehen. Alternativ kann die Abreinigungseinheit in einer der beiden Abreinigungspositionen vorliegen, in denen jeweils einer der beiden Filter abgereinigt wird. Vorzugsweise steht während der Abreinigung des einen Filters der jeweils andere Filter für die Filtration der Saugstromluft zur Verfügung, so dass vorteilhafterweise eine Stauberfassung durch die Staubsaugvorrichtung gleichzeitig mit der Abreinigung eines Filters der Staubsaugvorrichtung erfolgen kann, ohne dass es zu einem wesentlichen Saugverlust kommt, der sich nachteilig auf die Saugleistung und/oder die Stauberfassung auswirken könnte. Ein weiterer überraschender Vorteil der Erfindung besteht darin, dass im Rahmen des vorgeschlagenen Verfahrens nur eine Abreinigungseinheit bereitgestellt werden muss, obwohl beispielsweise zwei Filter abgereinigt werden sollen. Die Fachwelt war bisher davon ausgegangen, dass bei Verwendung von beispielsweise zwei Filtern auch zwei Abreinigungseinheiten vorgesehen sein müssen. Diese Vorteile der Erfindung werden insbesondere durch die beweglich ausgebildete Abreinigungseinheit ermöglicht, die sich - vorzugsweise angetrieben durch das Schubmodul - innerhalb der Unterdruckkammer der Staubsaugvorrichtung bewegen und verschiedene funktionelle Positionen innerhalb der Staubsaugvorrichtung einnehmen kann. Die Unterdruckkammer wird vorzugsweise von einer Turbine und den mindestens zwei Filtern der Staubsaugvorrichtung gebildet, wobei die Abreinigungseinheit vorzugsweise so beweglich ausgebildet ist, dass sie entweder in einer mittleren Position in der Unterdruckkammer vorliegen kann, so dass alle Filter fluidleitend mit der Unterdruckkammer verbunden sind, oder dass die Abreinigungseinheit in einer der beiden Abreinigungspositionen vorliegen kann, in denen je einer der beiden Filter vom Saugstrom abgekoppelt wird, so dass während der Abkoppelung des Filters vom Saugstrom eine Filterabreinigung durchgeführt werden kann. Diese Filterabreinigung erfolgt vorzugsweise unter Verwendung von Oszillationsbewegungen, wobei die Oszillationsbewegungen beispielsweise von Stößeln der Abreinigungseinheit auf die Filter übertragen werden können.

Vorzugsweise wird in einer ersten Abreinigungsposition der erste Filter abgereinigt und in einer zweiten Abreinigungsposition der Abreinigungseinheit der zweite Filter der Staubsaugvorrichtung. Es ist im Sinne der Erfindung bevorzugt, dass sich die Abreinigungseinheit nach erfolgter Abreinigung des ersten Filters von einer ersten Abreinigungsposition in eine mittlere Position oder die zweite Abreinigungsposition bewegen kann. Es kann im Sinne der Erfindung bevorzugt sein, dass die Abreinigungseinheit nach erfolgter Abreinigung eines Filters direkt in die andere Abreinigungsposition übergeht. Die Zeitspanne, in der sich die Abreinigungseinheit von der ersten in die zweite Abreinigungseinheit bewegt, kann im Sinne der Erfindung vorzugsweise als ΔtBew bezeichnet werden. Es kann aber auch bevorzugt sein, dass die Abreinigungseinheit in einer mittleren Position verharrt und die zweite Abreinigungsposition erst zu einem späteren Zeitpunkt einnimmt. Es ist im Sinne der Erfindung bevorzugt, dass die Steuerung der Abreinigungseinheit entsprechend eines Abreinigungsbedarfs der Filter erfolgt. Es kann aber auch bevorzugt sein, dass eine Zeitsteuerung oder eine Steuerung basierend auf weiteren Parametern angewendet wird.

Es ist im Sinne der Erfindung ganz besonders bevorzugt, dass eine Übertragung der Oszillationsbewegungen durch einen Formschluss zwischen Abreinigungseinheit und den Filterabsaugkanälen bzw. den Filtereingängen der Filter erfolgt. Dieser Formschluss kann insbesondere durch die Stößel der Abreinigungseinheit und durch die Filtereingänge gebildet werden. Vorzugsweise kann nach Durchführung des Verfahrensschrittes e) die Abreinigung des zweiten Filters erfolgen, wenn die Abreinigungseinheit vom Schubmodul in die zweite Abreinigungsposition bewegt wird. Schritt e) kann dann wiederholt werden, beispielsweise so lange, bis der Betrieb der Staubsaugvorrichtung beendet wird. Es ist im Sinne der Erfindung bevorzugt, die Filtereingänge auch als Saugkanäle oder Absaugkanäle zu bezeichnen.

Weitere Vorteile der Erfindung ergeben sich aus der folgenden Figurenbeschreibung. In der Figur sind verschiedene Ausführungsbeispiele der vorliegenden Erfindung dargestellt. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

Fig. 1    Ansicht einer bevorzugten Ausführungsform der Erfindung, insbesondere eine Anordnung der Abreinigungseinheit und der Filter gemäß der Linearlösung

Fig. 2    Darstellung einer ersten Abreinigungsposition der Abreinigungseinheit, bei der der erste Filter abgereinigt wird

Fig. 3 Darstellung einer zweiten Abreinigungsposition der Abreinigungseinheit, bei der der zweite Filter abgereinigt wird

Fig. 4 Ansicht einer bevorzugten Ausführungsform der Erfindung, insbesondere eine Anordnung der Abreinigungseinheit und der Filter gemäß der Drehlösung

Fig. 5 Darstellung einer ersten Abreinigungsposition der Abreinigungseinheit, bei der der erste Filter abgereinigt wird

Fig. 6 schematische Darstellung möglicher Exzenterpositionen und -anordnungen

**Ausführungsbeispiele:**

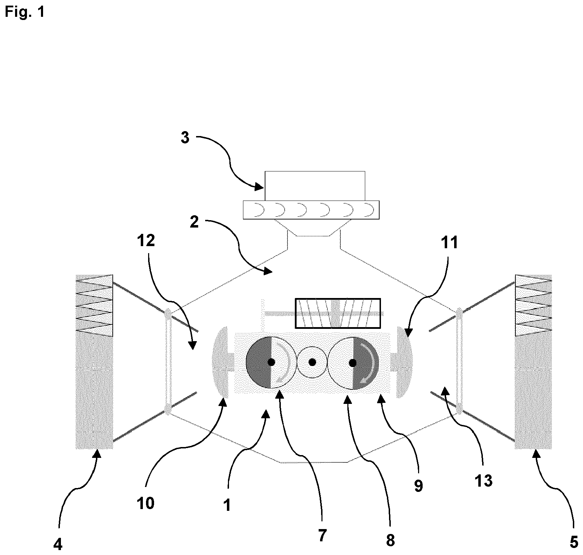

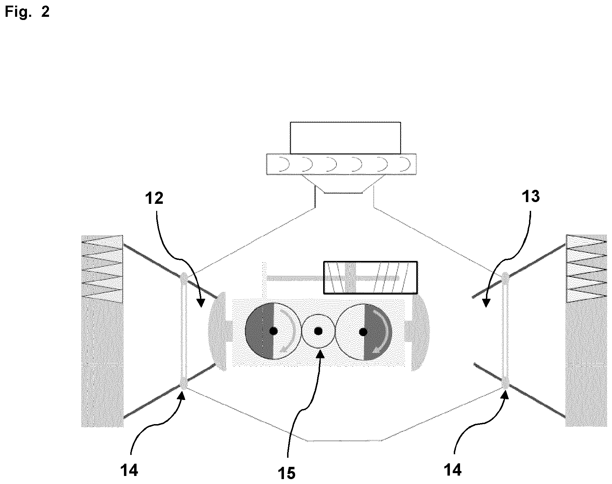

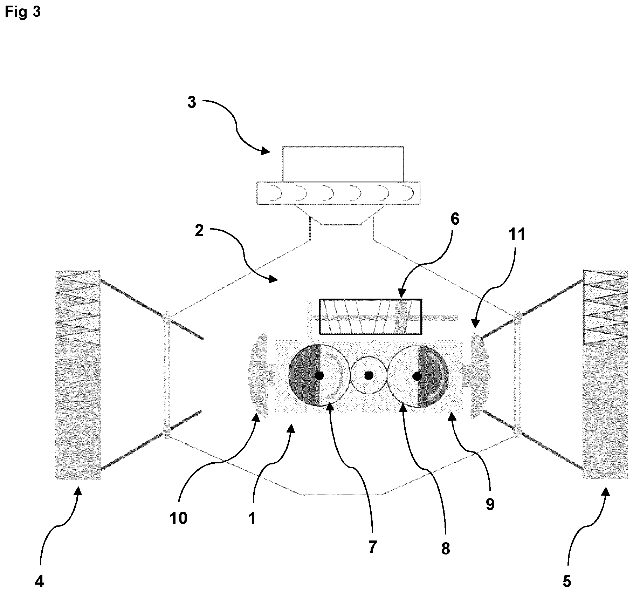

Figur 1 zeigt eine bevorzugte Ausgestaltung der Anordnung einer Abreinigungseinheit (1) in einer Staubsaugvorrichtung (nicht dargestellt). Insbesondere zeigt Fig. 1 einen ersten Filter (4) und einen zweiten Filter (5), die zusammen mit einer Turbine (3) eine Unterdruckkammer (2) im Inneren der Staubsaugvorrichtung einschließen. Die Filter (4 und 5) sind in dem in Figur 1 dargestellten Ausführungsbeispiel der Erfindung in einer Linearlösung angeordnet, die vorzugsweise dadurch charakterisiert ist, dass die Filter (4 und 5) im Wesentlichen parallel zueinander in einem unteren Bereich der Unterdruckkammer (2) angeordnet vorliegen. In der Unterdruckkammer (2) ist eine vorzugsweise beweglich ausgestaltete Abreinigungseinheit (1) angeordnet, die eine Exzentereinheit (9), sowie einen ersten Stößel (10) und einen zweiten Stößel (12) umfasst. Darüber hinaus wird die Unterdruckkammer (2) von Seitenwänden umgeben, die die Turbine (3) und die Filter (4 und 5) miteinander verbinden. Die Exzentereinheit (9) weist vorzugsweise zwei Exzenter (7 und 8), die sich vorzugsweise gleichsinnig, aber um 180 Grad versetzt zueinander drehen können. Durch diese zueinander versetzte Drehung der vorzugsweise zwei Exzenter (7 und 8) können sich die Fliehkräfte, die durch die Rotationsbewegungen der Exzenter (7 und 8) erzeugt werden, kompensieren. Durch die Rotationsbewegungen der Exzenter (7 und 8) wird vorteilhafterweise ein Drehmoment erzeugt, mit dem seinerseits Oszillationsbewegungen erzeugt werden können. Diese Oszillationsbewegungen können mit den Stößeln (10 und 11) auf die Filter (4 und 5) der Staubsaugvorrichtung übertragen werden, wodurch eine Abreinigung der Filter (4 und 5) bewirkt wird. Insbesondere sind die Stößel (10 und 11) dazu eingerichtet, die Eingänge (12 und 13) der Filter (4 und 5) gegenüber der Unterdruckkammer (2) abzuschließen. Dieser luft- bzw. druckdichte Abschluss wird im Sinne der Erfindung vorzugsweise als Entkopplung der Filter (4 und 5) von einem Saugstrom innerhalb der Unterdruckkammer (2) der Staubsaugvorrichtung bezeichnet. Vorzugsweise kann der erste Stößel (10) den ersten Filtereingang (12) verschließen, während der zweite Stößel (11) dazu eingerichtet ist, den zweiten Filtereingang (13) zu verschließen. In der in Figur 1 dargestellten Anordnung der Abreinigungseinheit (1) befindet sich die Abreinigungseinheit (1) in einer mittleren Position, in der beide Filter (4 und 5) für die Reinigung der Luft im Saugstrom zur Verfügung stehen und in der keine Filterabreinigung stattfindet. Die Abreinigungseinheit (1) kann mit einem Schubmodul (6) von der mittleren Position in einer erste Abreinigungsposition (siehe Figur 2) oder in eine zweite Abreinigungsposition (siehe Figur 3) überführt werden. Dazu wird mit Hilfe des Schubmoduls (6) eine Vertikalbewegung ("Linearlösung") oder eine Drehbewegung ("Drehlösung") der Abreinigungseinheit (1) bewirkt.

Dargestellt sind in Figur 1 auch elastische Aufhängungen (14), die vorzugsweise dazu verwendet werden können, die Filter (4 und 5) innerhalb der Staubsaugvorrichtung zu befestigen. Zwischen den Exzentern (7 und 8) kann eine Antriebsvorrichtung (15) angeordnet sein, mit der die beiden Exzenter (7 und 8) angetrieben werden können.

Figur 2 zeigt eine Abreinigungseinheit (1) in einer ersten Abreinigungsposition, bei der der erste Filter (4) abgereinigt wird. In dieser Position verschließt der erste Stößel (10) den Eingang (12) des ersten Filters (4) und trennt ihn so von der Unterdruckkammer (2) ab. Diese Entkopplung wird vorzugsweise durch einen Formschluss erreicht. In der Zeitspanne, in der der erste Filter (4) von dem ersten Stößel (10) von dem Saugstrom in der Unterdruckkammer (2) abgekoppelt ist, kann vorteilhafterweise eine Abreinigung des ersten Filters (4) durchgeführt werden, wobei der erste Filter (4) in dieser Zeit für die Reinigung der Luft des Saugstroms in der Unterdruckkammer (2) nicht zur Verfügung steht. Insbesondere wird die Abreinigungseinheit (1) durch das Schubmodul (6) von einer Position in eine andere Position bewegt. Dieser Positionswechsel erfolgt vorzugsweise durch eine Vertikalbewegung oder eine Drehbewegung der Abreinigungseinheit (1).

In der ersten Abreinigungsposition können die Oszillationsbewegungen, die durch die Rotationsbewegungen der Exzenter (7 und 8) erzeugt werden, mittels der Stößel (10 und 11) auf die Filter (4 und 5) übertragen werden, wodurch die Filter (4 und 5) abgereinigt werden. Die Stößel (10 und 11) können eine abgerundete Vorderseite aufweisen, die jeweils einem Filter (4 oder 5) bzw. einem Filtereingang (12 oder 13) zugewandt sind. Auf der der Exzentereinheit (9) zugewandten Seite weisen die Stößel (10 und 11) vorzugsweise plane Unterseiten auf, die im Wesentlichen parallel zu den Seitenwänden der Exzentereinheit (9) angeordnet sind.

Figur 3 zeigt eine Abreinigungseinheit (1) in einer zweiten Abreinigungsposition, bei der der zweite Filter (5) abgereinigt wird. In dieser Position verschließt der zweite Stößel (11) den Eingang (13) des zweiten Filters (5) und trennt ihn so von der Unterdruckkammer (2) ab. In der Zeitspanne, in der der zweite Filter (5) von dem zweiten Stößel (11) von dem Saugstrom in der Unterdruckkammer (2) abgekoppelt ist, kann vorteilhafterweise eine Abreinigung des zweiten Filters (5) durchgeführt werden, wobei der zweite Filter (5) in dieser Zeit für die Reinigung der Luft des Saugstroms in der Unterdruckkammer (2) nicht zur Verfügung steht.

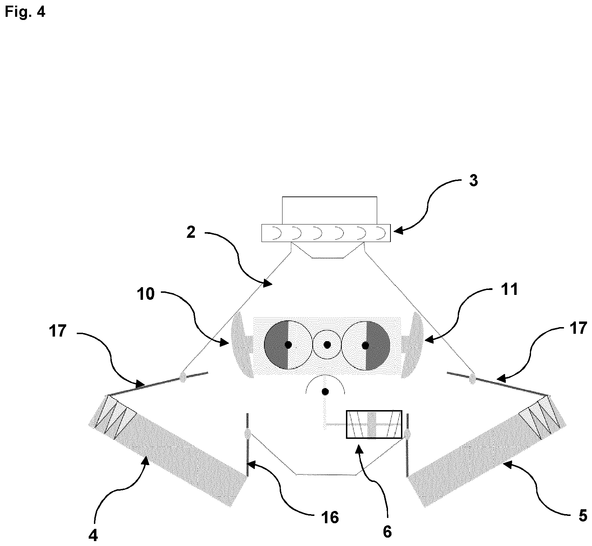

Figur 4 zeigt eine Darstellung einer bevorzugten Ausführungsform der vorgeschlagenen Anordnung der Abreinigungseinheit (1) und der Filter (4 und 5) gemäß einer sogenannten Drehlösung. Im Kontext der Drehlösung ist die Abreinigungseinheit (1) dazu eingerichtet, eine Drehbewegung um einen Drehpunkt (18) herum auszuführen. Dabei wird auch diese Bewegung vorzugsweise von dem Schubmodul (6) der Staubsaugvorrichtung bewirkt. In dem in Figur 4 dargestellten Ausführungsbeispiel der Erfindung ist die Abreinigungseinheit (1) über das Schubmodul (6) und dem Verbindungsmittel (18) mit dem zweiten Filter (5) verbunden. Insbesondere ist die Abreinigungseinheit (1) mit einer inneren Seitenkomponente (16) des zweiten Filters (5) verbunden. Vorzugsweise werden die Eingänge (12 und 13) der Filter (4 und 5) von Seitenkomponenten (16 und 17) gebildet. Diese Seitenkomponenten (16) können sich gegenüberliegen und im Wesentlichen parallel zueinander ausgebildet sein. Die jeweils andere Seitenkomponente (17) der Filtereingänge (12, 13) kann im Sinne der Erfindung bevorzugt als äußere Seitenkomponente (17) bezeichnet werden. Die Filter (4 und 5) können im Rahmen der Drehlösung schräg zueinander in der Staubsaugvorrichtung angeordnet sein. Beispielsweise kann der zweite Filter (5) mit einer gedachten Horizontalebene einen Neigungswinkel alpha einschließen, während der erste Filter mit der gedachten Horizontalebene einen Neigungswinkel beta einschließen kann, wobei die Neigungswinkel vorzugsweise über die Relation «beta = 180 ° - alpha» miteinander verknüpft sind.

Figur 4 zeigt eine mittlere Position der Abreinigungseinheit (1) innerhalb der Unterdruckkammer (1) der Staubsaugvorrichtung, in der beide Filter (4 und 5) gegenüber der Unterdruckkammer (2) geöffnet vorliegen. Der Saugstrom kann somit durch beide Filter (4 und 5) fließen und vorteilhafterweise von den Filtern (4 und 5) gereinigt werden.

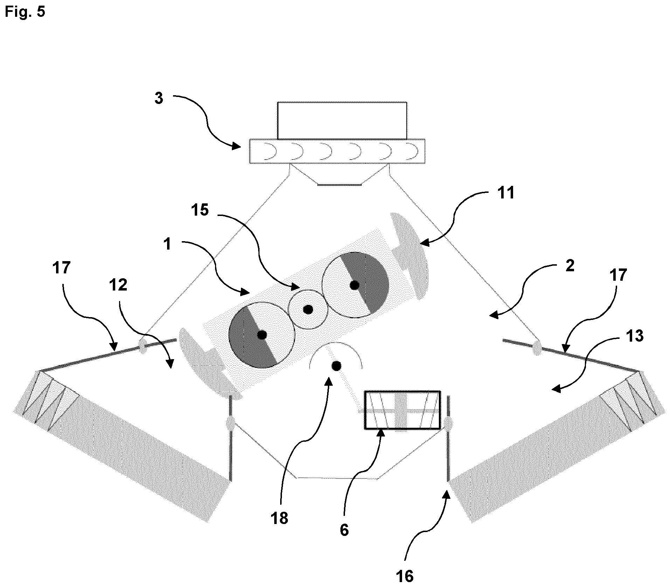

Figur 5 zeigt eine Abreinigungseinheit (1) in einer ersten Abreinigungsposition, bei der der erste Filter (4) abgereinigt wird, wobei die Filter (4 und 5) gemäß einer Drehlösung vorzugsweise schräg zueinander angeordnet sind. Der erste Stößel (10) verschließt dabei den ersten Filtereingang (12), wobei diese Entkopplung vorzugsweise durch einen Formschluss erreicht wird. Dazu bildet sich vorzugsweise eine Verbindung aus zwischen dem ersten Stößel (10) und den Seitenkomponenten (16 und 17), die den Eingang (12) des ersten Filters (4) bilden.

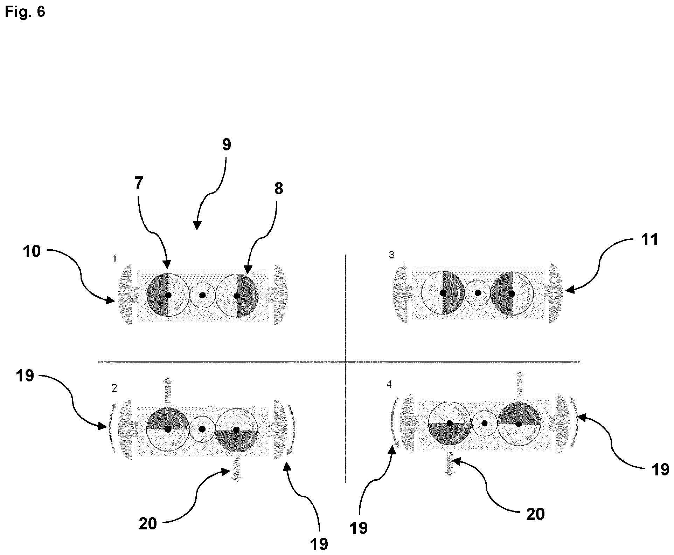

Figur 6 zeigt eine schematische Darstellung möglicher Exzenterpositionen und -anordnungen innerhalb der Unterdruckkammer (2) der Staubsaugvorrichtung. Insbesondere zeigt Figur 6 vier übliche Positionen, die die Exzenter (7, 8) der Exzentereinheit (9) der Abreinigungseinheit (1) einnehmen können. Teilabbildung 1 (oben links) zeigt die Konfiguration der Exzenter (7, 8) "Längsachse außen", bei der die Fliehkräfte (20) der Exzenter (7, 8) vorzugsweise in der gleichen Achse nach außen gerichtet sind, so dass sie sich vorteilhafterweise kompensieren bzw. gegenseitig aufheben. Teilabbildung 2 (unten links) zeigt die Konfiguration der Exzenter (7, 8) "Querachse Uhrzeigersinn", bei der die Fliehkräfte (20) der Exzenter (7, 8) vorteilhafterweise ein Drehmoment (19) im Uhrzeigersinn erzeugen bzw. auslösen, wobei das Drehmoment (19) im Sinne der Erfindung vorzugsweise auch als Drehkraft oder Abreinigungskraft bezeichnet wird. Teilabbildung 3 (oben rechts) zeigt die Konfiguration der Exzenter (7, 8) "Längsachse innen", bei der die Fliehkräfte (20) der Exzenter (7, 8) vorzugsweise in der gleichen Achse nach innen gerichtet sind, so dass sie sich erneut vorteilhafterweise kompensieren. Teilabbildung 4 (unten rechts) zeigt die Konfiguration der Exzenter (7, 8) "Querachse Gegen-Uhrzeigersinn", in der die Fliehkräfte (20) der Exzenter (7, 8) so zueinander angeordnet sind, dass ein Drehmoment (19) gegen den Uhrzeigersinn erzeugt bzw. ausgelöst wird, wobei das Drehmoment (19) zur Erzeugung der Oszillationsbewegung und zur Abreinigung der Filter (4, 5) der Staubsaugvorrichtung verwendet werden kann.

## Bezugszeichenliste

| | |
|---|---|
| 1 | Abreinigungseinheit |
| 2 | Unterdruckkammer |
| 3 | Turbine |
| 4 | erster Filter |
| 5 | zweiter Filter |
| 6 | Schubmodul |
| 7 | erster Exzenter |
| 8 | zweiter Exzenter |
| 9 | Exzentereinheit |
| 10 | erster Stößel |
| 11 | zweiter Stößel |
| 12 | erster Filtereingang |
| 13 | zweiter Filtereingang |
| 14 | elastische Aufhängung |
| 15 | Antriebsvorrichtung für die Exzenter |
| 16 | innere Seitenkomponente |
| 17 | äußere Seitenkomponente |
| 18 | Verbindungsmittel/Drehpunkt |
| 19 | Drehmoment |
| 20 | Fliehkräfte |
| alpha | Neigungswinkel des zweiten Filters |
| beta | Neigungswinkel des ersten Filters |

## Patentansprüche

1. Anordnung einer Abreinigungseinheit (1) in einer Staubsaugvorrichtung
**dadurch gekennzeichnet, dass**
die Abreinigungseinheit (1) in einer Unterdruckkammer (2) der Staubsaugvorrichtung vorliegt, wobei die Unterdruckkammer (2) von einer Turbine (3) und einem ersten Filter (4) und einem zweiten Filter (5) begrenzt wird, wobei die Abreinigungseinheit (1) ein Schubmodul (6) umfasst, das dazu eingerichtet ist, die Abreinigungseinheit (1) so innerhalb der Unterdruckkammer (2) zu positionieren, dass je ein Filter (4 oder 5) von einem Saugstrom entkoppelbar ist und eine Oszillationsbewegung der Abreinigungseinheit (1) auf den entkoppelten Filter (4 oder 5) übertragbar ist.

2. Anordnung nach Anspruch 1
**dadurch gekennzeichnet, dass**
die Abreinigungseinheit (1) zwei Exzenter (7 und 8) umfasst, die durch ihre Rotationsbewegungen dazu eingerichtet sind, die Oszillationsbewegung zu erzeugen.

3. Anordnung nach Anspruch 2
**dadurch gekennzeichnet, dass**
die Abreinigungseinheit (1) eine Exzentereinheit (9) zur Aufnahme der Exzenter (7 und 8) umfasst.

4. Anordnung nach Anspruch 2 oder 3
**dadurch gekennzeichnet, dass**
die Exzenter (7 und 8) dazu eingerichtet sind, gleichsinnige Rotationsbewegungen auszuführen.

5. Anordnung nach einem der vorhergehenden Ansprüche
**dadurch gekennzeichnet, dass**
die Abreinigungseinheit (1) einen ersten Stößel (10) und zweiten Stößel (11) aufweist, die einen seitlichen Abschluss der Abreinigungseinheit (1) bilden, wobei der erste Stößel (10) dazu eingerichtet ist, einen Eingang (12) des ersten Filters (4) abzudichten und der zweite Stößel (11) dazu eingerichtet ist, einen Eingang (13) des zweiten Filters (5) abzudichten.

6. Anordnung nach einem der vorhergehenden Ansprüche
**dadurch gekennzeichnet, dass**
die Eingänge (12 und 13) der Filter (7 und 8) Seitenkomponenten (14 und 15) umfassen, die die Filtereingänge (12 und 13) bilden.

7. Anordnung nach einem der vorhergehenden Ansprüche
**dadurch gekennzeichnet, dass**
die Abreinigungseinheit (1) bei einer Linearlösung im Wesentlichen zwischen den Filtern (4 und 5) angeordnet vorliegt.

8. Anordnung nach Anspruch 7
**dadurch gekennzeichnet, dass**
die Stößel (10 und 11) bei der Linearlösung im Wesentlichen parallel zu der Exzentereinheit (9) angeordnet vorliegen.

9. Anordnung nach Anspruch 7 oder 8
**dadurch gekennzeichnet, dass**
die Filter (4 und 5) bei der Linearlösung im Wesentlichen parallel zueinander angeordnet vorliegen.

10. Anordnung nach einem der Ansprüche 1 bis 6
**dadurch gekennzeichnet, dass**
die Abreinigungseinheit (1) bei einer Drehlösung im Wesentlichen oberhalb der Filter (4 und 5) angeordnet vorliegt.

11. Anordnung nach Anspruch 10
**dadurch gekennzeichnet, dass**
die Stößel (10 und 11) bei der Drehlösung in Bezug auf die Exzentereinheit (9) der Abreinigungseinheit (1) verkippt angeordnet vorliegen.

12. Anordnung nach Anspruch 10 oder 11
**dadurch gekennzeichnet, dass**
die Filter (4 und 5) bei der Drehlösung schräg zueinander angeordnet vorliegen.

13. Staubsaugvorrichtung, die eine Anordnung einer Abreinigungseinheit (1) nach einem der vorhergehenden Ansprüche umfasst.

14. Verfahren zur Abreinigung von Filtern (4, 5) in einer Staubsaugvorrichtung nach Anspruch 13, wobei das Abreinigungsverfahren die folgenden Schritte umfasst:

   a) Bereitstellung einer Staubsaugvorrichtung mit einer Abreinigungseinheit (1), wobei die Abreinigungseinheit (1) zunächst in einer mittleren Position in einer Unterdruckkammer (2) angeordnet vorliegt, so dass Luft eines Saugstroms während des Betriebs der Staubsaugvorrichtung mit Filtern (4, 5) gereinigt wird,
   b) Bewegung der Abreinigungseinheit (1) innerhalb der Unterdruckkammer (2) der Staubsaugvorrichtung, so dass eine erste oder eine zweite Abreinigungsposition eingenommen wird,
   c) Formschluss zwischen der Abreinigungseinheit (1) und einem Eingang (12) des ersten Filters (4) oder einem Eingang (13) des zweiten Filters (5),
   d) Übertragung von Oszillationsbewegungen von der Abreinigungseinheit (1) auf den ersten Filter (4) oder den zweiten Filter (5), wobei der erste Filter (4) oder der zweite Filter (5) durch die Oszillationsbewegungen abgereinigt wird,
   e) Bewegung der Abreinigungseinheit (1) in die mittlere Position oder in die jeweils andere Abreinigungsposition.

**Claims**

1. Arrangement of a de-dusting unit (1) in a vacuuming device,
   **characterized in that**
   the de-dusting unit (1) is in a vacuum chamber (2) of the vacuuming device, the vacuum chamber (2) being delimited by a turbine (3) and a first filter (4) and a second filter (5), the de-dusting unit (1) comprising a displacement module (6) which is designed to position the de-dusting unit (1) within the vacuum chamber (2) in such a way that one filter (4 or 5) at a time can be isolated from a suction flow and an oscillating movement of the de-dusting unit (1) can be transmitted to the isolated filter (4 or 5).

2. Arrangement according to Claim 1,
   **characterized in that**
   the de-dusting unit (1) comprises two eccentrics (7 and 8), which are designed to produce the oscillating movement by their rotational movements.

3. Arrangement according to Claim 2,
   **characterized in that**
   the de-dusting unit (1) comprises an eccentric unit (9) for holding the eccentrics (7 and 8).

4. Arrangement according to Claim 2 or 3,
   **characterized in that**
   the eccentrics (7 and 8) are designed to perform rotational movements in the same direction.

5. Arrangement according to one of the preceding claims,
   **characterized in that**
   the de-dusting unit (1) has a first tappet (10) and a second tappet (11), which form a lateral termination of the de-dusting unit (1), the first tappet (10) being designed to seal off an inlet (12) of the first filter (4) and the second tappet (11) being designed to seal off an inlet (13) of the second filter (5).

6. Arrangement according to one of the preceding claims,
   **characterized in that**
   the inlets (12 and 13) of the filters (7 and 8) comprise side components (14 and 15), which form the filter inlets (12 and 13).

7. Arrangement according to one of the preceding claims,
   **characterized in that**
   in the case of a linear solution, the de-dusting unit (1) is arranged substantially between the filters (4 and 5).

8. Arrangement according to Claim 7,
   **characterized in that**
   in the case of the linear solution, the tappets (10 and 11) are arranged substantially parallel to the eccentric unit (9).

9. Arrangement according to Claim 7 or 8,
   **characterized in that**
   in the case of the linear solution, the filters (4 and 5) are arranged substantially parallel to one another.

10. Arrangement according to one of Claims 1 to 6,
    **characterized in that**
    in the case of a rotary solution, the de-dusting unit (1) is arranged substantially above the filters (4 and 5).

11. Arrangement according to Claim 10,
    **characterized in that**
    in the case of the rotary solution, the tappets (10 and 11) are arranged tipped with respect to the eccentric unit (9) of the de-dusting unit (1).

12. Arrangement according to Claim 10 or 11,
    **characterized in that**
    in the case of the rotary solution, the filters (4 and 5) are arranged obliquely in relation to one another.

13. Vacuuming device which comprises an arrangement of a de-dusting unit (1) according to one of the preceding claims.

14. Method for de-dusting filters (4, 5) in a vacuuming device according to Claim 13, the de-dusting method comprising the following steps:

    a) provision of a vacuuming device comprising a de-dusting unit (1), the de-dusting unit (1) being initially arranged in a middle position in a vacuum chamber (2), so that air of a suction flow is cleaned by filters (4, 5) during the operation of the vacuuming device,
    b) movement of the de-dusting unit (1) within the vacuum chamber (2) of the vacuuming device, so that a first or a second de-dusting position is assumed,
    c) a form fit between the de-dusting unit (1) and an inlet (12) of the first filter (4) or an inlet (13) of the second filter (5),
    d) transmission of oscillating movements from the de-dusting unit (1) to the first filter (4) or the second filter (5), the first filter (4) or the second filter (5) being de-dusted by the oscillating movements,
    e) movement of the de-dusting unit (1) into the middle position or into the other de-dusting position, respectively.

**Revendications**

1. Agencement d'une unité de nettoyage (1) dans un dispositif d'aspiration de poussière,
   **caractérisé en ce que**
   l'unité de nettoyage (1) se trouve dans une chambre sous vide (2) du dispositif d'aspiration de poussière, la chambre sous vide (2) étant délimitée par une turbine (3) et un premier filtre (4) et un deuxième filtre (5), l'unité de nettoyage (1) comprenant un module de poussée (6), qui est adapté pour positionner l'unité de nettoyage (1) à l'intérieur de la chambre sous vide (2) de telle sorte qu'un filtre (4 ou 5) peut être découplé d'un courant d'aspiration et qu'un mouvement d'oscillation de l'unité de nettoyage (1) peut être transmis au filtre découplé (4 ou 5).

2. Agencement selon la revendication 1,
   **caractérisé en ce que**
   l'unité de nettoyage (1) comprend deux excentriques (7 et 8) qui, par leurs mouvements de rotation, sont adaptés pour générer le mouvement d'oscillation.

3. Agencement selon la revendication 2,
   **caractérisé en ce que**
   l'unité de nettoyage (1) comprend une unité d'excentrique (9) pour recevoir les excentriques (7 et 8).

4. Agencement selon la revendication 2 ou 3,
   **caractérisé en ce que**
   les excentriques (7 et 8) sont adaptés pour effectuer des mouvements de rotation de même sens.

5. Agencement selon l'une quelconque des revendications précédentes,
   **caractérisé en ce que**
   l'unité de nettoyage (1) présente un premier coulisseau (10) et un deuxième coulisseau (11) qui forment une fermeture latérale de l'unité de nettoyage (1), le premier coulisseau (10) étant adapté pour étanchéifier une entrée (12) du premier filtre (4) et le deuxième coulisseau (11) étant adapté pour étanchéifier une entrée (13) du deuxième filtre (5).

6. Agencement selon l'une quelconque des revendications précédentes,
   **caractérisé en ce que**
   les entrées (12 et 13) des filtres (7 et 8) comprennent des composants latéraux (14 et 15) qui forment les entrées de filtre (12 et 13).

7. Agencement selon l'une quelconque des revendications précédentes,
   **caractérisé en ce que**
   l'unité de nettoyage (1) est agencée essentiellement entre les filtres (4 et 5) dans le cas d'une solution linéaire.

8. Agencement selon la revendication 7,
   **caractérisé en ce que**
   les coulisseaux (10 et 11) sont agencés essentiellement parallèlement à l'unité d'excentrique (9) dans le cas de la solution linéaire.

9. Agencement selon la revendication 7 ou 8,
   **caractérisé en ce que**
   les filtres (4 et 5) sont agencés essentiellement parallèlement l'un à l'autre dans le cas de la solution linéaire.

10. Agencement selon l'une quelconque des revendications 1 à 6,
    **caractérisé en ce que**
    l'unité de nettoyage (1) est agencée essentiellement au-dessus des filtres (4 et 5) dans le cas d'une solution rotative.

11. Agencement selon la revendication 10,
    **caractérisé en ce que**
    les coulisseaux (10 et 11) sont agencés de manière inclinée par rapport à l'unité d'excentrique (9) de l'unité de nettoyage (1) dans le cas de la solution rotative.

12. Agencement selon la revendication 10 ou 11,
    **caractérisé en ce que**
    les filtres (4 et 5) sont agencés en biais l'un par rapport à l'autre dans le cas de la solution rotative.

13. Dispositif d'aspiration de poussière, qui comprend un agencement d'une unité de nettoyage (1) selon l'une quelconque des revendications précédentes.

14. Procédé de nettoyage de filtres (4, 5) dans un dispositif d'aspiration de poussière selon la revendication 13, le procédé de nettoyage comprenant les étapes suivantes :

    a) la fourniture d'un dispositif d'aspiration de poussière avec une unité de nettoyage (1), l'unité de nettoyage (1) étant tout d'abord agencée dans une position intermédiaire dans une chambre sous vide (2), de telle sorte que de l'air d'un courant d'aspiration est nettoyé avec des filtres (4, 5) pendant le fonctionnement du dispositif d'aspiration de poussière,
    b) le déplacement de l'unité de nettoyage (1) à l'intérieur de la chambre sous vide (2) du dispositif d'aspiration de poussière, de telle sorte qu'une première ou une deuxième position de nettoyage est prise,
    c) la coopération de forme entre l'unité de nettoyage (1) et une entrée (12) du premier filtre (4) ou une entrée (13) du deuxième filtre (5),
    d) la transmission de mouvements l'oscillation de l'unité de nettoyage (1) au premier filtre (4) ou au deuxième filtre (5), le premier filtre (4) ou le deuxième filtre (5) étant nettoyé par les mouvements d'oscillation,

e) le déplacement de l'unité de nettoyage (1) dans la position intermédiaire ou dans l'autre position de nettoyage respective.

**Fig. 1**

**Fig. 2**

**Fig 3**

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2052660 A2
- EP 2749193 A1
- EP 1629762 A2
- EP 3146881 A1